# EUROPEAN PATENT APPLICATION

(11) **EP 1 617 280 A2**
(43) Date of publication of application: **18.01.2006**
(21) Application number: 05254289.1
(22) Date of filing: 08.07.2005
(51) Int. Cl.: G02F 1/13

(54) **Frame assembly and electronic device**

(30) Priority: 12.07.2004 JP 2004205320; 30.05.2005 JP 2005156686
(71) Applicant: SONY CORPORATION, Tokyo (JP)
(72) Inventor: Shoji, Junichi,c/o Sinyo Sanwa Technos Corporation, Kawasaki-shi, Kanagawa (JP); Nagano, Masahiro, c/o Sony Corporation, Tokyo (JP)
(74) Representative: Leppard, Andrew John

(57) **Abstract**

An outer frame has an outer frame upper side plate, an outer frame lower side plate, an outer frame left side plate, and an outer frame right side plate. In an upper right corner, a transparent upper side plate, a transparent right side plate, and holders are applied to inner surfaces of the outer frame upper side and the outer frame right side plate, and are held together by a corner joint and a corner bracket that are inserted into a right end of the outer frame upper side plate and the outer frame right side plate. Upper left, lower left, and lower right corners are similarly assembled.

## Description

The present invention relates to a frame assembly. Embodiments relate to a frame assembly for use as an outer casing or housing of various electronic devices, and an electronic unit having an electronic device such as a flat display panel, e.g., a liquid-crystal display panel, mounted in a frame assembly.

Flat display panels such as liquid-crystal display panels and plasma display panels have frame components attached thereto and are mounted in frame assemblies.

Japanese Patent Laid-open No. 2004-69822 discloses a frame structure including holders mounted on and gripping left and right skirts of a rear frame of a flat display panel and holders mounted on and gripping left and right ends of a front transparent panel of the flat display panel.

Japanese Patent Laid-open No. 2004-61922 discloses a housing mounted on a rear side of a flat display panel and speaker storage regions on left and right ends of a front glass plate of the flat display panel.

There is a demand for a flat display panel structure having a flat display panel with upper, lower, left, and right sides surrounded by a frame for improved mechanical strength and appearance.

A frame assembly for use in such a flat display panel structure may include a frame having upper, lower, left, and right frame members formed integrally together. If the upper, lower, left, and right frame members are integrally molded, then the frame can easily be manufactured.

According to another demand for better appearance, the above frame is made of metal such as aluminum, and even if the flat display panel has a large screen size, the upper, lower, left, and right frame members of the frame are constructed as side plates that are thin in vertical and horizontal directions and that have a certain width along the depth, i.e., in a direction perpendicular to the screen, so that the peripheral edges around the screen are relatively small to make the overall flat display panel compact.

However, making the frame according to an integral forming process such as an aluminum die-casting process requires special dedicated dies and is time-consuming.

Embodiments of the present invention seek to provide a frame assembly having a frame having a certain width along the depth, which can easily be manufactured as an aluminum extrusion, the frame assembly including corners assembled essentially free of positional misalignments and having fastening screws and rivets concealed from external view.

According to one aspect of the present invention, there is provided a frame assembly including an outer frame having upper, lower, left, and right side plates, an inner frame disposed in the outer frame, and a plurality of holders applied to inner surfaces of the upper, lower, left, and right side plates of the outer frame, for fixedly holding the upper, lower, left, and right side plates of the outer frame within the inner frame, wherein the outer frame has a plurality of corners, and the upper and lower side plates of the outer frame and the left and right side plates of the outer frame are interfitted in the corners.

With the above frame assembly, even if the outer frame is made of aluminum and has a certain width along its depth, the outer frame can easily be manufactured by an extrusion molding process rather than an aluminum die-casting process using dies.

In the corners of the outer frame, the upper side plate and the left side plate, the upper side plate and the right side plate, the lower side plate and the left side plate, and the lower side plate and the right side plate are interfitted without undue positional misalignments.

The upper, lower, left, and right side plates of the outer frame are fixedly held in the inner frame by the holders applied to the inner surfaces of the side plates. The holders and fastening screws and rivets are concealed from external view outside of the corners. Because the holders and fastening screws and rivets are concealed from external view, and also because the upper and lower side plates of the outer frame and the left and right side plates of the outer frame are interfitted in the corners, the frame assembly has an excellent appearance.

Further particular and preferred aspects of the present invention are set out in the accompanying independent and dependent claims. Features of the dependent claims may be combined with features of the independent claims as appropriate, and in combinations other than those explicitly set out in the claims.

The present invention will be described further, by way of example only, with reference to preferred embodiments thereof as illustrated in the accompanying drawings, in which:
FIG. 1 is a front elevational view of a liquid crystal display panel device as an electronic device according to an embodiment of the present invention;
FIG. 2 is a front elevational view of a frame assembly, with an inner frame omitted from illustration, according to an embodiment of the present invention;
FIGS. 3A, 3B, and 3C are views showing outer, side, and inner surfaces, respectively, of each of outer frame upper and lower side plates;
FIGS. 4A, 4B, and 4C are views showing outer, side, and inner surfaces, respectively, of each of outer frame left and right side plates;
FIG. 5 is a cross-sectional view taken along line F5-F5 of FIGS. 3A, 3B, and 3C and FIGS. 4A, 4B, and 4C;
FIG. 6 is a cross-sectional view showing the definition of ribs in the cross-sectional structure shown in FIG. 5;
FIG. 7 is a perspective view of an inner frame of the frame assembly;
FIGS. 8A and 8B are exploded perspective and perspective views, respectively, of an upper side portion of the frame assembly;
FIGS. 9A and 9B are exploded perspective and perspective views, respectively, of a left side portion of the frame assembly;
FIGS. 10A and 10B are views showing front side and inner surfaces, respectively, of a right end portion of the outer frame upper side plate;
FIGS. 11A and 11B are views showing front side and inner surfaces, respectively, of a corner bracket;
FIGS. 12A, 12B, and 12C are views showing the manner in which the corner bracket is press-fitted into the right end portion of the outer frame upper side plate;
FIGS. 13A and 13B are views showing the manner in which the corner bracket is press-fitted into the right end portion of the outer frame upper side plate;
FIG. 14 is a cross-sectional view showing how components of an upper right corner of the frame assembly are assembled; and
FIG. 15 is a perspective view showing how components of the upper right corner of the frame assembly are interfitted.

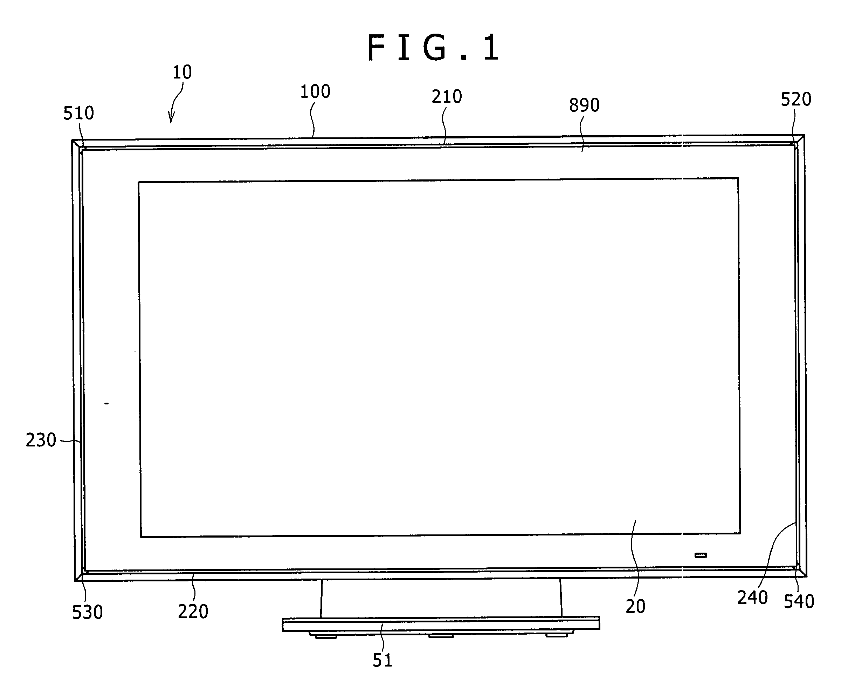

FIG. 1 shows an electronic device according to an embodiment of the present invention, which incorporates a frame assembly according to an embodiment of the present invention. In FIG. 1, the electronic device includes a liquid crystal display panel device.

As shown in FIG. 1, the liquid crystal display panel device includes a frame assembly 10 and a liquid crystal display panel 20, and is mounted on a stand 51.

The frame assembly 10 includes an outer frame 100, an inner frame (cabinet) that is omitted from illustration in FIG. 1, a transparent upper side plate 210, a transparent lower side plate 220, a transparent left side plate 230, and a transparent right side plate 240. The outer frame 100 has upper left, upper right, lower left, and lower right corners combined with respective corner covers 510, 520, 530, 540.

The transparent upper side plate 210, the transparent lower side plate 220, the transparent left side plate 230, and the transparent right side plate 240 serve to create a floating effect which makes the display screen of the liquid crystal display panel 20 look floating in the air by making a wall behind the liquid crystal display panel device visible through the transparent upper side plate 210, the transparent lower side plate 220, the transparent left side plate 230, and the transparent right side plate 240.

The liquid crystal display panel 20 is mounted in the inner frame, and has a liquid crystal display unit, a backlight, and a circuit and a power supply for energizing the liquid crystal display unit and the backlight.

The display screen of the liquid crystal display panel 20 has peripheral edges spaced inwardly from the inner edges of the transparent upper side plate 210, the transparent lower side plate 220, the transparent left side plate 230, and the transparent right side plate 240. The space between the peripheral edges of the display screen and the inner edges of the side plates 210, 220, 230, 240 is covered with a front mask 890 for concealing an inner structure of the liquid crystal display panel device.

The front mask 890 has a number of small circular holes (not shown) defined in each of the areas thereof which are aligned with respective left and right speakers of the liquid crystal display panel device.

In the description which follows, the terms "vertical", "upper", "lower", "horizontal", "left", and "right", etc. are used with respect to the display screen of the liquid crystal display panel 20 as shown in FIG. 1, and the term "depth" is used to represent a direction normal to the display screen, i.e., the sheet of FIG. 1. The terms "inward", "inner", "outward", and "outer", etc. are used with respect to the geometric center of the display screen. The terms "forward" and "front" are used to represent a direction toward the viewer of FIG. 1, and the terms "rearward" and "rear" are used to represent a direction away from the viewer of FIG. 1.

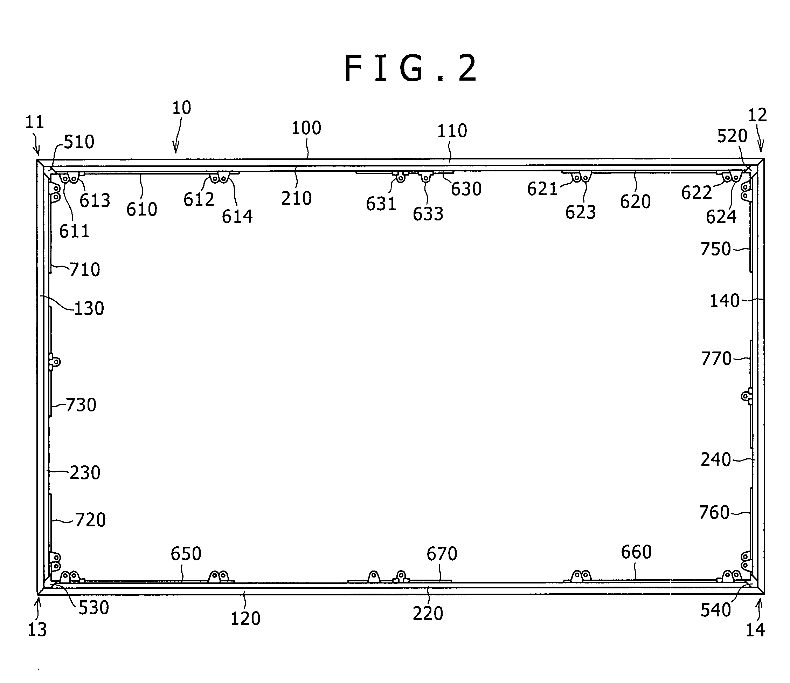

FIG. 2 shows the frame assembly 10, with the inner frame omitted from illustration.

As shown in FIG. 2, the outer frame 100 of the frame assembly 10 includes an outer frame upper side plate 110, an outer frame lower side plate 120, an outer frame left side plate 130, and an outer frame right side plate 140.

The outer frame upper side plate 110, the outer frame lower side plate 120, the outer frame left side plate 130, and the outer frame right side plate 140 are in the form of aluminum extrusions having identical cross-sectional shapes.

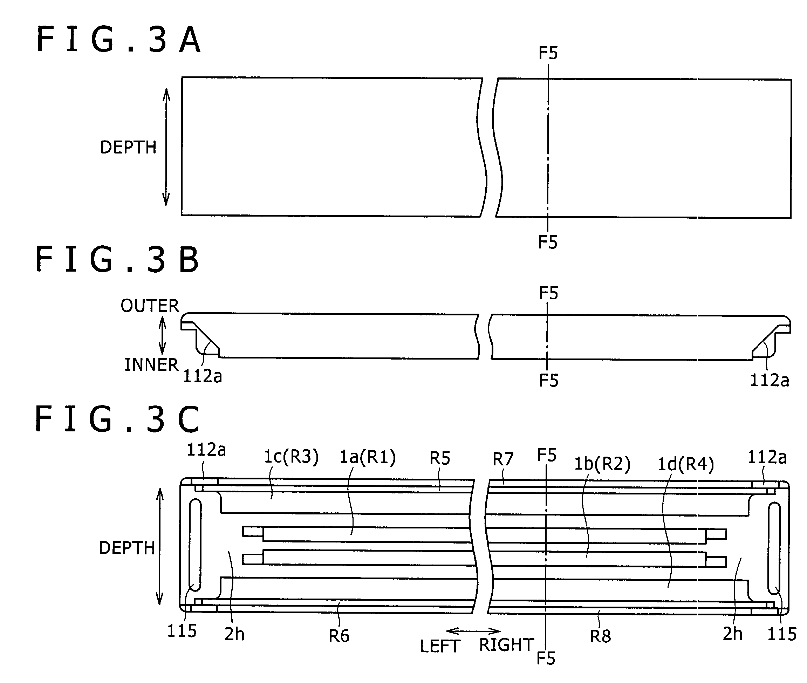

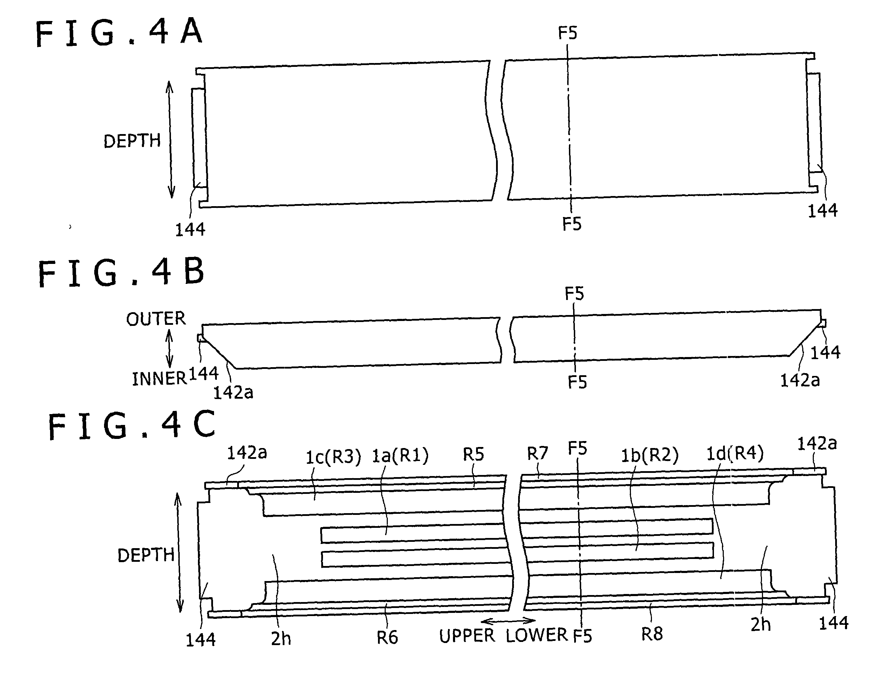

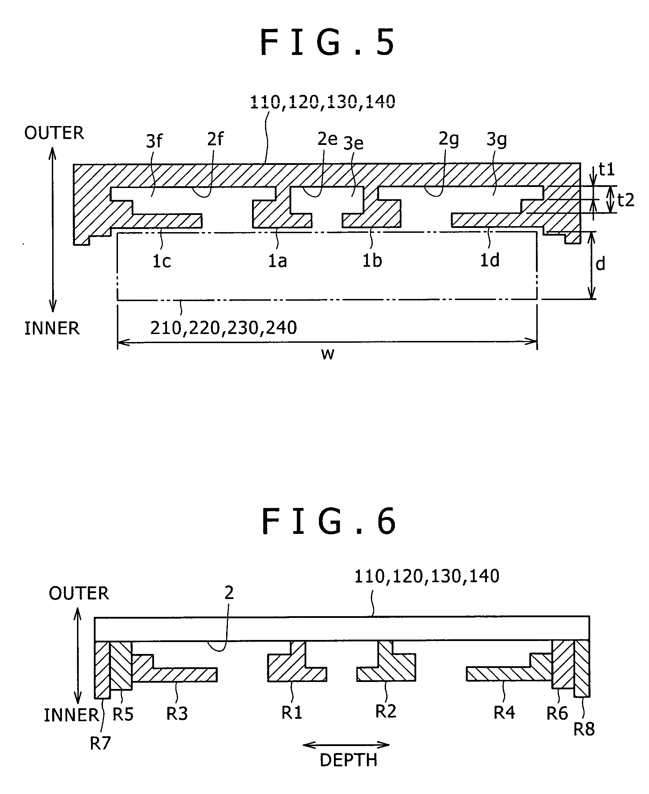

FIGS. 3A, 3B, and 3C show outer, side (front or rear), and inner surfaces, respectively, of each of the outer frame upper and lower side plates 110, 120. FIGS. 4A, 4B, and 4C show outer, side (front or rear), and inner surfaces, respectively, of each of the outer frame left and right side plates 130, 140. FIG. 5 shows a cross-sectional shape of each of the outer frame upper side plate 110, the outer frame lower side plate 120, the outer frame left side plate 130, and the outer frame right side plate 140, the view being taken along line F5-F5 of FIGS. 3A, 3B, and 3C and FIGS. 4A, 4B, and 4C. FIG. 6 shows the definition of ribs and a base surface of each of the outer frame upper side plate 110, the outer frame lower side plate 120, the outer frame left side plate 130, and the outer frame right side plate 140.

The leftward direction of the outer frame upper side plate 110 shown in FIGS. 3A, 3B, and 3C is the same as the leftward direction of the display screen, and the right direction of the outer frame lower side plate 120 shown in FIGS. 3A, 3B, and 3C is the same as the leftward direction of the display screen. The leftward direction of the outer frame left side plate 130 shown in FIGS. 4A, 4B, and 4C is the same as the upward direction of the display screen, and the right direction of the outer frame right side plate 140 shown in FIGS. 4A, 4B, and 4C is the same as the upward direction of the display screen.

The inner surface of each of the outer frame upper side plate 110, the outer frame lower side plate 120, the outer frame left side plate 130, and the outer frame right side plate 140 which are extrusion-molded has ribs R1, R2, R3, R4, R5, F6, R7, and F8 that are integrally formed symmetrically in transverse and longitudinal directions of the side plates. As shown in FIG. 5, each of the outer frame upper side plate 110, the outer frame lower side plate 120, the outer frame left side plate 130, and the outer frame right side plate 140 has slits 3e, 3f, 3g defined parallel to each other in the transverse direction of the side plates.

The ribs R1, R2, R4, R4 have respective inner surfaces 1a, 1b, 1c, 1d lying flush with each other, and the slits 3e, 3f, 3g are defined by respective surfaces 2e, 2f, 2g lying flush with each other as a base surface 2.

As shown in FIG. 5, the slits 3f, 3g which are positioned on opposite sides on the slit 3e have opposite end portions represented by a gap t1 and a central portion represented by a gap t2, the gap t1 being smaller than the gap t2.

As indicated by the two-dot-and-dash lines in FIG. 5, the transparent upper side plate 210, the transparent lower side plate 220, the transparent left side plate 230, and the transparent right side plate 240 are applied by double-faced adhesive tapes to the inner surfaces 1a, 1b, 1c, 1d, which lie flush with each other, of the outer frame upper side plate 110, the outer frame lower side plate 120, the outer frame left side plate 130, and the outer frame right side plate 140, as described later.

As shown in FIGS. 3A, 3B, and 3C, each of the outer frame upper side plate 110 and the outer frame lower side plate 120 has opposite ends, i.e., left and right ends, where the ribs R1 through R6 on their inner surfaces are partly cut off into flat surfaces 2h as part of the base surface 2, and grooves 115 are formed in the respective flat surfaces 2h along the width of the side plates 110, 120, by a machining process that is performed after the side plates 110, 120 are extrusion-molded.

Slanted recesses 112a are formed in the left and right ends of the ribs R7 of each of the outer frame upper side plate 110 and the outer frame lower side plate 120, and similar slanted recesses are also formed in the left and right ends of the ribs R8 of each of the outer frame upper side plate 110 and the outer frame lower side plate 120, by a machining process that is performed after the side plates 110, 120 are extrusion-molded.

As shown in FIGS. 4A, 4B, and 4C, each of the outer frame left side plate 130 and the outer frame right side plate 140 has opposite ends, i.e., upper and lower ends, where the ribs R1 through R6 on their inner surfaces are partly cut off into flat surfaces 2h as part of the base surface 2, and ridges 144 are formed on the ends of the flat surfaces 2h for fitting engagement in the grooves 115 in the outer frame upper side plate 110 and the outer frame lower side plate 120, by a machining process that is performed after the side plates 130, 140 are extrusion-molded.

Slanted lands 142a are formed on the upper and lower ends of the ribs R7 of each of the outer frame left side plate 130 and the outer frame right side plate 140 for abutting engagement in the slanted recesses 112a of the outer frame upper side plate 110 and the outer frame lower side plate 120, and similar slanted lands are formed on the upper and lower ends of the ribs R8 of each of the outer frame left side plate 130 and the outer frame right side plate 140, by a machining process that is performed after the side plates 130, 140 are extrusion-molded.

As shown in FIGS. 1, 2, and 5, as described above, the transparent upper side plate 210, the transparent lower side plate 220, the transparent left side plate 230, and the transparent right side plate 240 are applied by double-faced adhesive tapes to the inner surfaces 1a, 1b, 1c, 1d of the outer frame upper side plate 110, the outer frame lower side plate 120, the outer frame left side plate 130, and the outer frame right side plate 140, as described later.

The transparent upper side plate 210, the transparent lower side plate 220, the transparent left side plate 230, and the transparent right side plate 240 are formed as acrylic or polycarbonate plates. As shown in FIG. 5, each of the transparent upper side plate 210, the transparent lower side plate 220, the transparent left side plate 230, and the transparent right side plate 240 has a thickness d of about 10 mm in the vertical or horizontal direction and a width w of about several cm or greater along the depth, i.e., in the front-to-rear direction. Therefore, the width w is greater than the thickness d.

As shown in FIG. 2, holders 610, 620, 630 are applied by double-faced adhesive tapes respectively to left, right, and central regions of the inner surface of the transparent upper side plate 210.

Holders 650, 660, 670 are applied by double-faced adhesive tapes respectively to left, right, and central regions of the inner surface of the transparent upper side plate 220.

Similarly, holders 710, 720, 730 are applied by double-faced adhesive tapes respectively to upper, lower, and central regions of the inner surface of the transparent left side plate 230, and holders 750, 760, 770 are applied by double-faced adhesive tapes respectively to upper, lower, and central regions of the inner surface of the transparent right side plate 240.

The holders are in the form of metal plates. The holder 610 has lugs 611, 612, 613, 614 integrally formed with an inner surface thereof. The holder 620 has lugs 621, 622, 623, 624 integrally formed with an inner surface thereof. The holder 630 has lugs 631, 633 integrally formed with an inner surface thereof. These lugs serve to attach the outer frame upper side plate 110, the outer frame lower side plate 120, the outer frame left side plate 130, and the outer frame right side plate 140, i.e., the outer frame 100, to the inner frame. When the lugs are fastened to the inner frame by screws, the outer frame 100 and the inner frame are joined to each other, providing the frame assembly 10.

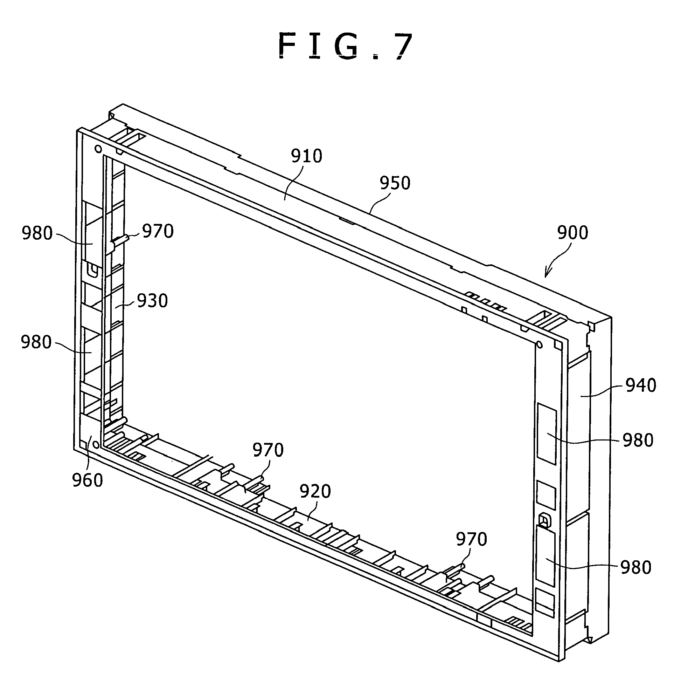

FIG. 7 shows the inner frame, generally denoted by 900. The inner frame 900 includes an inner frame main body 950 having an inner frame upper side plate 910, an inner frame lower side plate 920, an inner frame left side plate 930, and an inner frame right side plate 940, and an inner frame front face 960. The inner frame 900 is integrally molded of plastics.

The inner frame main body 950 has threaded holes 970 defined in inner surfaces thereof for receiving the screws by which the lugs of the holders described above are fastened. The inner frame front face 960 has through holes 980 defined in left and right plates thereof for housing speakers therein.

The outer frame 100, to which the transparent upper side plate 210, the transparent lower side plate 220, the transparent left side plate 230, and the transparent right side plate 240 are applied, is mounted on the inner frame 900.

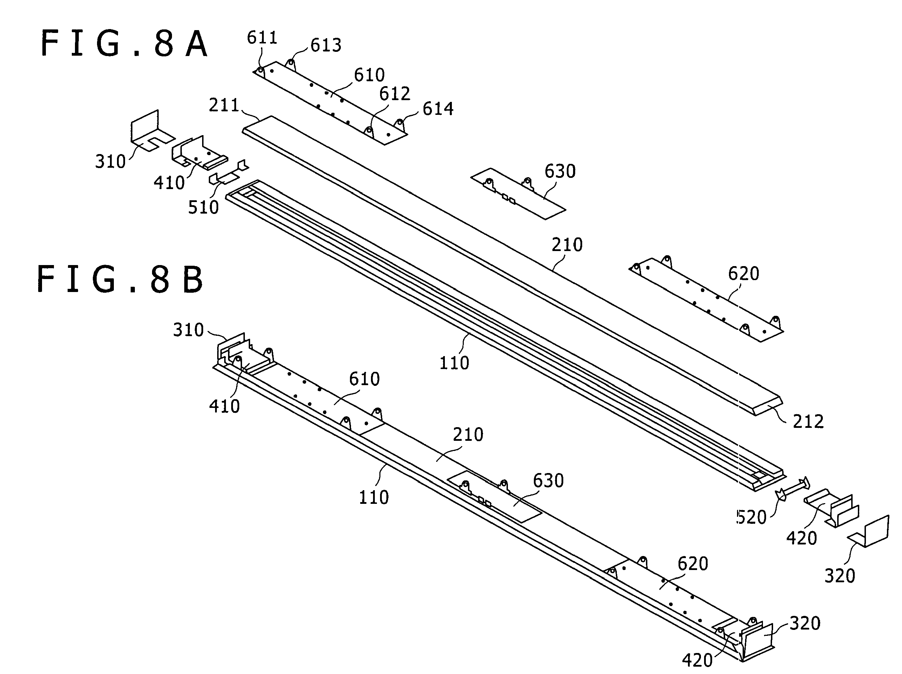

FIGS. 8A and 8B show an upper side portion of the outer frame 100. As shown in FIG. 8A, the transparent upper side plate 210 has left and right end faces 211, 212 (not shown in FIGS. 1 and 2) formed as slanted surfaces inclined at 45° to the horizontal and vertical directions and having a mirror finish.

The holders 610, 620, 630 are applied to the inner surface of the transparent upper side plate 210 by double-faced adhesive tapes. The transparent upper side plate 210 to which the holders 610, 620, 630 are applied is applied to the inner surface of the outer frame upper side plate 110 by a double-faced adhesive tape.

Before the double-faced adhesive tapes are applied, thin mirror-finish films are printed on the inner and outer surfaces of the transparent upper side plate 210, so that the double-faced adhesive tapes on the inner and outer surfaces of the transparent upper side plate 210 will invisible from the front side in the assembled state shown in FIG. 8B.

Other components of the upper side portion of the outer frame 100 include a corner bracket 310, a corner joint 410, and a corner cover 510 for assembling an upper left corner 11 shown in FIG. 2, and a corner bracket 320, a corner joint 420, and a corner cover 520 for assembling an upper right corner 12 shown in FIG. 2.

The outer frame 100 has a lower side portion which is of a structure similar to the upper side portion thereof except that they are vertically symmetrical.

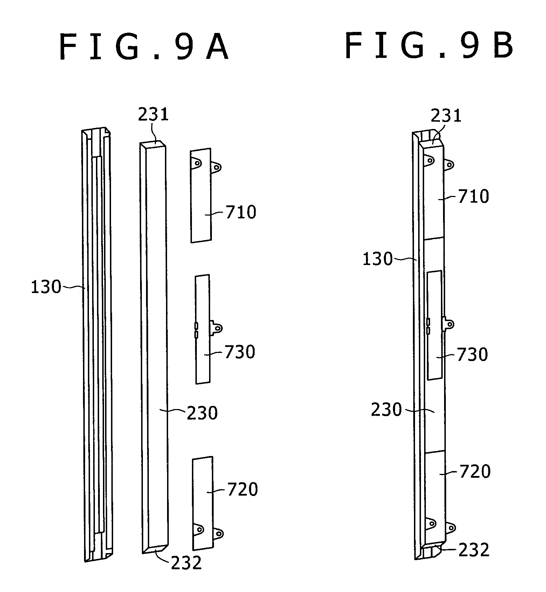

FIGS. 9A and 9B show a left side portion of the outer frame 100. As shown in FIG. 9A, the transparent left side plate 230 has upper and lower end faces 231, 232 (not shown in FIGS. 1 and 2) formed as slanted surfaces inclined at 45° to the horizontal and vertical directions and having a mirror finish.

The holders 710, 720, 730 are applied to the inner surface of the transparent left side plate 230 by double-faced adhesive tapes. The transparent left side plate 230 to which the holders 710, 720, 730 are applied is applied to the inner surface of the outer frame left side plate 130 by a double-faced adhesive tape.

Before the double-faced adhesive tapes are applied, thin mirror-finish films are printed on the inner and outer surfaces of the transparent left side plate 230, so that the double-faced adhesive tapes on the inner and outer surfaces of the transparent left side plate 230 will be invisible from the front side in the assembled state shown in FIG. 9B.

The outer frame 100 has a right side portion which is of a structure similar to the left side portion thereof except that they are horizontally symmetrical.

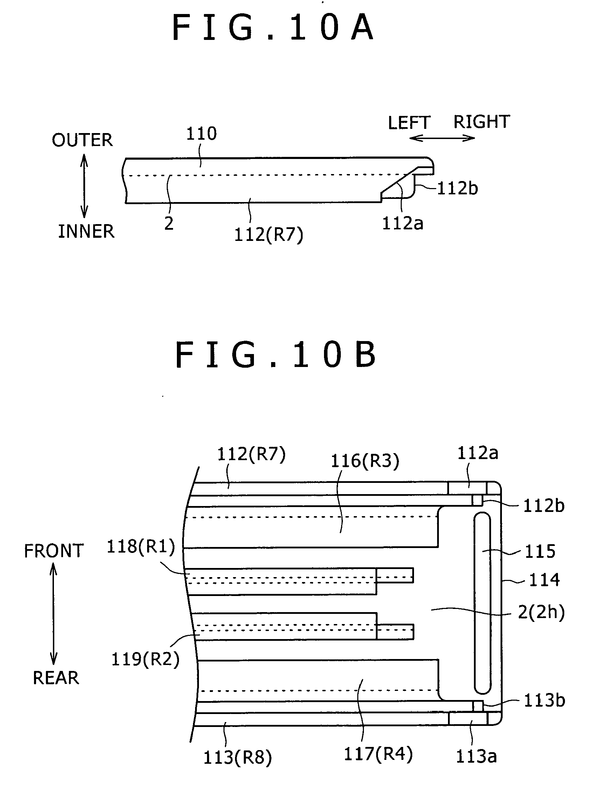

FIGS. 10A and 10B show a right end portion of the outer frame upper side plate 110. FIG. 10A shows a front side of the right end portion of the outer frame upper side plate 110, and FIG. 10B shows an inner surface of the right end portion of the outer frame upper side plate 110.

The slanted recess 112a also shown in FIGS. 3B and 3C is formed in the right end of a front end 112 that is provided by the rib R7 of the outer frame upper side plate 110 shown in FIGS. 3C and 6, and the slanted recess 113a is formed in the right end of a rear end 113 that is provided by the rib R8 shown in FIGS. 3C and 6.

Fitting ribs 112b, 113b are formed, respectively adjacent to the slanted recesses 112a, 113a, on the right ends of the ribs R5, R6 of the outer frame upper side plate 110 shown in FIGS. 3C and 6, by a machining process.

The inner flat surface 2h on the right end of the outer frame upper side plate 110 is part of the base surface 2, as described above. The groove 115 extending along the width of the outer frame upper side plate 110, as also shown in FIG. 3C, is formed in a right end portion of the inner flat surface 2h at a position slightly spaced from a right end face 114 of the outer frame upper side plate 110.

The rib R3 is cut off a predetermined length from the right end face 114, providing an engaging plate 116 integral with a portion of the base surface 2 of the outer frame upper side plate 110 which is close to the front end 112. The rib R4 is also cut off a predetermined length from the right end face 114, providing an engaging plate 117 integral with a portion of the base surface 2 of the outer frame upper side plate 110 which is close to the rear end 113.

The ribs R1, R2 are cut off a length, which is greater than the above predetermined lengths from the right end face 114, providing engaging plates 118, 119 integral with a central portion of the base surface 2 along the width of the outer frame upper side plate 110.

The slit 3f shown in FIG. 5 is formed between the engaging plates 116, 118 and the surface 2f. The slit 3g shown in FIG. 5 is formed between the engaging plates 117, 119 and the surface 2g. The slit 3e is formed between the engaging plates 118, 119 and the surface 2e.

The left end portion of the outer frame upper side plate 110 is similar to the right end portion thereof except that they are horizontally symmetrical. The outer frame lower side plate 120 has a left end portion which is similar to the left end portion of the outer frame upper side plate 110 except that they are vertically symmetrical. The outer frame lower side plate 120 has a right end portion which is similar to the right end portion of the outer frame upper side plate 110 except that they are vertically symmetrical, i.e., which is similar to the left end portion of the outer frame lower side plate 120 except that they are horizontally symmetrical.

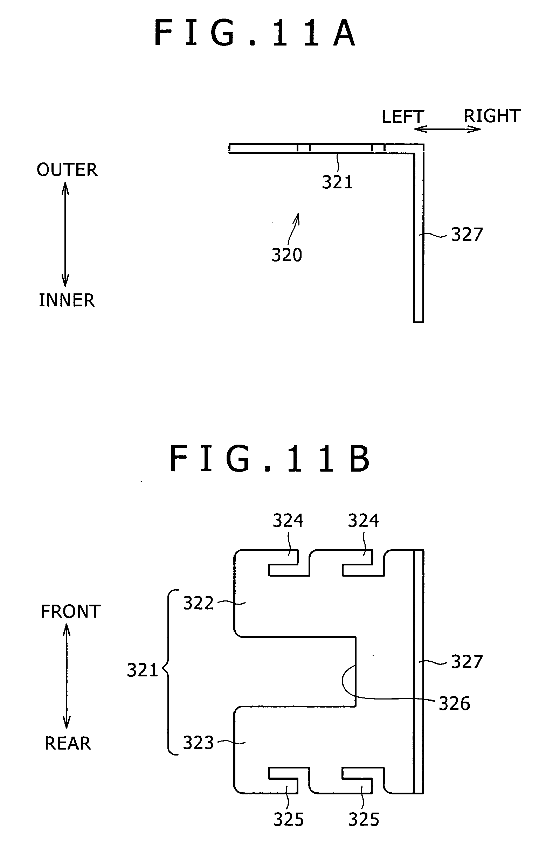

FIGS. 11A and 11B show the corner bracket 320 for use on the right end portion of the outer frame upper side plate 110 shown in FIGS. 8A and 8B. FIG. 11A shows a front side of the corner bracket 320, and FIG. 11B shows an inner surface of the corner bracket 320.

The corner bracket 320 includes an upper side plate 321 for extending along the right end of the outer frame upper side plate 110 and a right side plate 327 integrally joined perpendicularly to the upper side plate 321 for extending along the upper end of the outer frame right side plate 140.

The upper side plate 321 has two spaced legs 322, 323 disposed on front and rear sides thereof, and an engaging edge 326, described later, disposed between the legs 322, 323 at right ends thereof.

The upper side plate 321 also has two spaced engaging fingers 324, 325 on each of front and rear edges thereof.

The corner bracket 310 for use on the left end of the outer frame upper side plate 110 shown in FIGS. 8A and 8B is similar to the above corner bracket 320 except that they are horizontally symmetrical. Corner brackets for use on the left and right ends, respectively, of the outer frame lower side plate 120 are similar to the corner brackets 310, 320 except that they are vertically symmetrical.

Before the corners 11, 12, 13, 14 are assembled, components of the frame assembly 10 are assembled as follows:
(1) First, double-faced adhesive tapes are applied to the inner surfaces of the outer frame upper side plate 110, the outer frame lower side plate 120, the outer frame left side plate 130, and the outer frame right side plate 140.
(2) Then, double-faced adhesive tapes are applied to the holders 610, 620, 630, 650, 660, 670, 710, 720, 730, 750, 760, and 770 shown in FIG. 2.
(3) Thereafter, the holders 610, 620, 630 are applied to the transparent upper side plate 210, the holders 650, 660, 670 to the transparent lower side plate 220, the holders 710, 720, 730 to the transparent left side plate 230, and the holders 750, 760, 770 to the transparent right side plate 240.
(4) Then, the transparent upper side plate 210 is applied to the inner surface of the outer frame upper side plate 110, the transparent lower side plate 220 to the inner surface of the outer frame lower side plate 120, the transparent left side plate 230 to the inner surface of the outer frame left side plate 130, and the transparent right side plate 240 to the inner surface of the outer frame right side plate 140.

Thereafter, the corners 11, 12 of the outer frame upper side plate 110 and the corners 13, 14 of the outer frame lower side plate 120 are assembled as follows:

First, the corner 11 of the outer frame upper side plate 110 is assembled as follows: The corner cover 520 shown in FIG. 8A is applied to the corner cover 420, and then the corner joint 420 is inserted into the right end of the outer frame upper side plate 110.

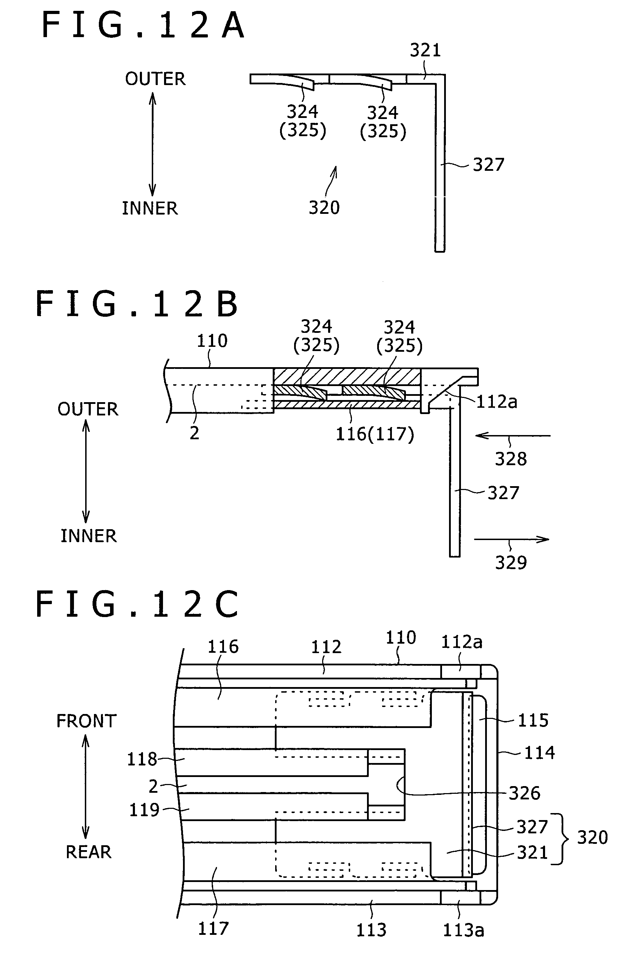

Then, as shown in FIG. 12A, the engaging fingers 324, 325 of the upper side plate 321 of the corner bracket 320 are bent inwardly. As indicated by the arrow 328 in FIG. 12B, the upper side plate 321 of the corner bracket 320 is inserted between the engaging plates 116, 117 and the base surface 2 of the right end of the outer frame upper side plate 110. The corner cover 520 and the corner joint 420 are omitted from illustration in FIGS. 12B and 12C.

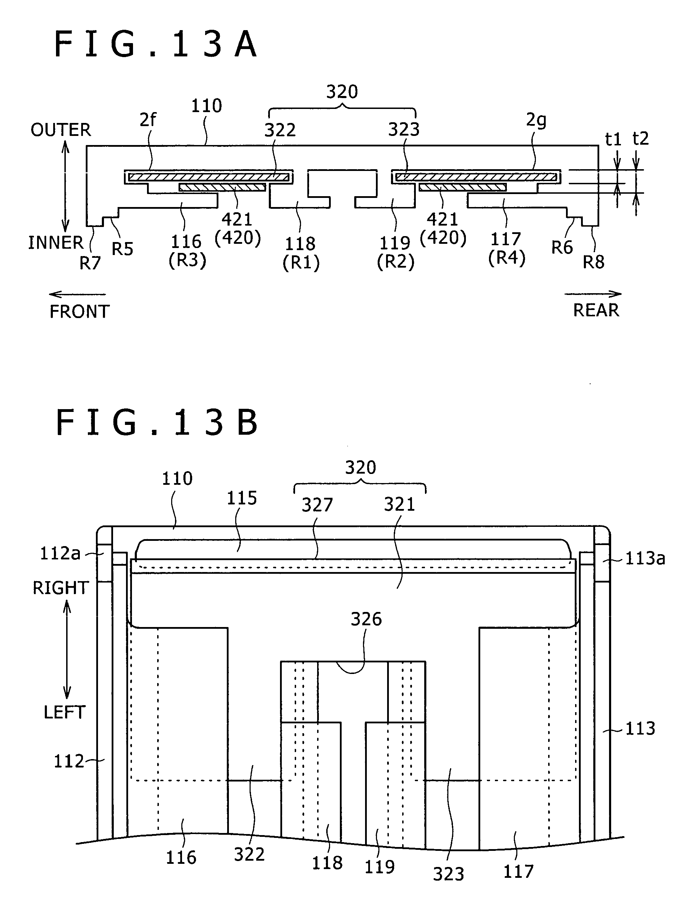

As shown in FIG. 13A, the engaging plates 116, 117 have portions closer to the front end 112 and the rear end 113, respectively, the portions providing a relatively low roof at the gap t1. The engaging plates 116, 117 also have portions extending closely to the engaging plates 118, 119, the portions providing a relatively high roof at the gap t2.

As shown in FIG. 13A, an outer horizontal plate 421, described later, of the corner joint 420 is inserted into relatively narrow inner portions of the gap t2, and the legs 322, 323 of the upper side plate 321 of the corner bracket 320 are superposed on the outer lateral plates 421 and inserted into the relatively wide gap t1.

At this time, as shown in FIGS. 12C and 13B, the upper side plate 321 of the corner bracket 320 is pressed into a position where the engaging edge 326 between the legs 322, 323 abuts against the engaging plates 118, 119 and the right side plate 327 covers a portion of the groove 115.

With the corner bracket 320 pressed into the right end of the outer frame upper side plate 110, even when an attempt is made to pull the corner bracket 320 from the right end of the outer frame upper side plate 110 as indicated by the arrow 329 in FIG. 12B, the engaging fingers 324, 325 bite into the low roof of the engaging plates 116, 117 near the front end 112 and the rear end 113, and hence the corner bracket 320 cannot be pulled out.

Therefore, after the corner cover 520, the corner joint 420, and the corner bracket 320 are assembled on the right end of the outer frame upper side plate 110, they remain assembled unless an emergency measure is taken, e.g., unless the assembly itself is broken.

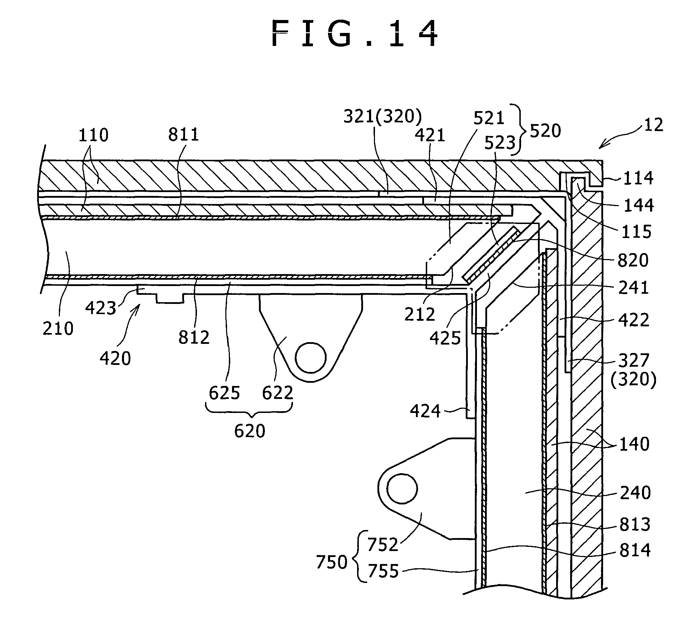

FIG. 14 shows how the components of the upper right corner 12 are assembled. The corner joint 420 includes an integral structure including an outer horizontal plate 421, an outer vertical plate 422, an inner horizontal plate 423, an inner vertical plate 424, and a joint plate 425. The outer horizontal plate 421 has two legs, as with the upper side plate 321 of the corner bracket 320 shown in FIGS. 11A, 11B, 12A, 12B, 12C, 13A, and 13B.

As shown in FIG. 13A, the width of the corner joint 420 along the depth of the outer frame 100 in the horizontal direction in FIGS. 13A, 13B or the direction normal to the sheet of FIG. 14 is smaller than the width of the corner bracket 320 along the depth of the outer frame 100.

The corner cover 520 of the upper right corner 12 has a corner cover base 523 and two end plates 521 integrally formed with the opposite ends of the corner cover base 523 along the depth, i.e., in the direction normal to the sheet of FIG. 14, the end plates 521 being shaped to cover the right end of the transparent upper side plate 210 and the upper end of the transparent right side plate 240, as indicated by the two-dot-and-dash lines in FIG. 14. In FIGS. 1 and 2, the front end plate of the corner cover 520 is shown.

The upper right corner 12 is assembled as follows: As shown in FIG. 14, the corner cover base 523 is applied to the joint plate 425 by a double-faced adhesive tape 820, thereby mounting the corner cover 520 on the corner joint 420.

Then, the outer horizontal plate 421 of the corner joint 420 on which the corner cover 520 is mounted is inserted into the right end of the outer frame upper side plate 110, to which the transparent upper side plate 210 with the holder 620 applied thereto by the double-faced adhesive tape 812 is applied by the double-faced adhesive tape 811, until the outer horizontal plate 421 abuts against the engaging plates 118, 119 shown in FIGS. 12C and 13B.

At this time, the inner horizontal plate 423 of the corner joint 420 functions to support the inner surface, where the double-sided adhesive tape 812 is not applied, of a plate 625 of the holder 620 along the transparent upper side plate 210.

At this time, the transparent upper side plate 240 with the holder 750 applied thereto by the double-faced adhesive tape 814 is applied to the outer frame right side plate 140 by the double-faced adhesive tape 813.

The holder 620 has the lug 622 disposed on the inner surface of the plate 625, and the holder 750 also has a lug 752 on a plate 755 thereof.

After the corner joint 420 is thus inserted into the right end of the outer frame upper side plate 110, the corner bracket 320 is pressed into the right end of the outer frame upper side plate 110, as described above with reference to FIGS. 12A, 12B, 12C, 13A, and 13B.

The upper right corner 12 of the outer frame upper side plate 110 has now been assembled. When the upper left corner 11 of the outer frame upper side plate 110 has been assembled, the upper side portion of the frame assembly 10 is assembled as shown in FIG. 8B.

The outer fame lower side plate 120 is assembled in the same manner as with the outer frame upper side plate 110.

The outer frame upper side plate 110, the outer fame lower side plate 120, the outer frame left side plate 130, and the outer frame right side plate 140 thus assembled are assembled onto the inner frame 900 as follows:

First, the outer frame left side plate 130 and the outer frame right side plate 140 are installed on the inner frame 900. At this time, the lugs of the holders on the outer frame left side plate 130 and the outer frame right side plate 140 are inserted into slits, not shown, in the inner frame main body 950, and fastened thereto by screws threaded into the threaded holes 970 shown in FIG. 7. In this manner, the outer frame left side plate 130 and the outer frame right side plate 140 are thus mounted on the inner frame 900.

Then, the corners 11, 12, 13, 14 are put together, and the lugs of the holders on the outer frame upper side plate 110 and the outer fame lower side plate 120 are inserted into slits, not shown, in the inner frame main body 950, and fastened thereto by screws threaded into the threaded holes 970 shown in FIG. 7. In this manner, the outer frame upper side plate 110 and the outer fame lower side plate 120 are thus mounted on the inner frame 900.

In the upper right corner 12, as shown in FIG. 14, the outer vertical plate 422 of the corner joint 420 and the right side plate 327 of the corner bracket 320 are inserted into the upper end of the outer frame right side plate 140, and the outer frame right side plate 140, the transparent right side plate 240, and the holder 750 which are integrally combined by the double-sided adhesive tapes 814, 813 are sandwiched by the outer vertical plate 422 and the inner vertical plate 424 of the corner joint 420. The upper left corner 11, the lower left corner 13, and the lower right corner 14 are of a similar construction.

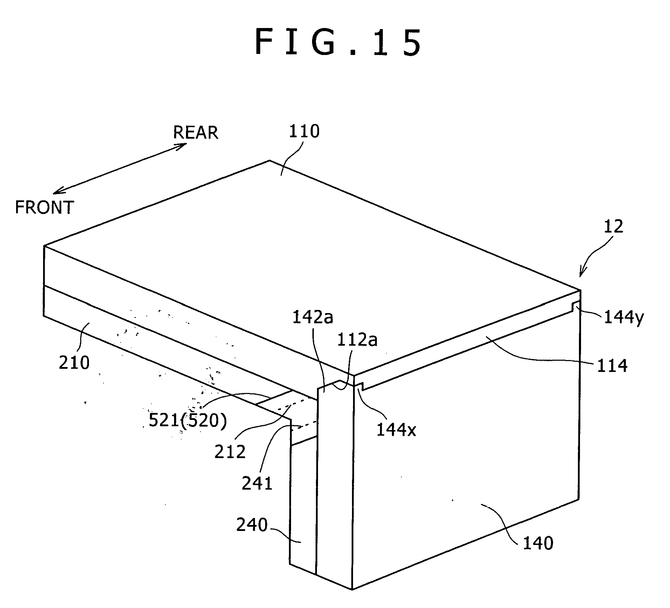

FIG. 15 shows how the outer frame upper side plate 110 and the outer frame right side plate 140 are interfitted.

The front side of the upper end of the outer frame right side plate 140 has the slanted lands 142a shown in FIGS. 4B and 4C which are fitted in the slanted recesses 112a in the outer frame upper side plate 110 shown in FIGS. 3A, 3B, 3C, 10A, and 10B. The rear side of the upper end of the outer frame right side plate 140 also has the slanted lands fitted in the slanted recesses 113a in the outer frame upper side plate 110 shown in FIGS. 10A and 10B.

The upper end of the outer frame right side plate 140 has the ridge 144 shown in FIGS. 4B and 4C which is fitted in the groove 115 in the outer frame upper side plate 110 shown in FIGS. 3A, 3B, 3C, 10B, 12C, and 13B. As shown in FIG. 15, the outer frame right side plate 140 has upper end engaging teeth 144x, 144y disposed on the right surface of the upper end thereof, the upper end engaging teeth 144x, 144y being positioned respectively near the front and rear sides of the outer frame right side plate 140.

After the corner bracket 320 is pressed into the right end of the outer frame upper side plate 110, the ridge 144 on the upper end of the outer frame right side plate 140 is inserted into the groove 115 in the right end of the outer frame upper side plate 110. The outer frame right side plate 140 and the outer frame upper side plate 110 are interfitted until the slanted lands 142a on the front side of the outer frame right side plate 140 are brought into abutting engagement in the slanted recesses 112a in the outer frame upper side plate 110, the slanted lands on the rear side of the outer frame right side plate 140 are brought into abutting engagement in the slanted recesses 113a in the outer frame upper side plate 110, and the right end face 114 of the outer frame upper side plate 110 is fitted between the upper end engaging teeth 144x, 144y of the outer frame right side plate 140.

The upper right corner 12 is thus assembled by interfitting the outer frame upper side plate 110 and the outer frame right side plate 140, without the need for screws and rivets, and hence is of excellent appearance.

The upper left corner 11, the lower left corner 13, and the lower right corner 14 are assembled in the same manner as described above.

With the frame assembly 10 thus assembled, the outer frame upper side plate 110 and the outer frame right side plate 140 in the upper right corner 12 are essentially free of any positional misalignments in the horizontal and vertical directions and along the depth, i.e., in the front-to-rear direction. The outer frame upper side plate 110 and the outer frame left side plate 130 in the upper left corner 11, the outer frame lower side plate 120 and the outer frame left side plate 130 in the lower left corner 13, and the outer frame lower side plate 120 and the outer frame right side plate 140 in the lower right corner 14 are also essentially free of any positional misalignments in those directions.

In the upper right corner 12, as shown in FIG. 15, the slanted right end face 212 of the transparent upper side plate 210 and a slanted upper end face 241 of the transparent right side plate 240 are concealed by the end plate 521 of the corner cover 520. Therefore, even if the transparent upper side plate 210 and the transparent right side plate 240 suffer manufacturing errors or are installed with positional errors, the right end of the transparent upper side plate 210 and the upper end of the transparent right side plate 240 in the upper right corner 12 are invisible, keeping the frame assembly 10 in good quality.

The inner and outer surfaces of the transparent upper side plate 210 and the upper end of the transparent right side plate 240, to which the double-sided adhesive taps 812, 811 or the double-sided adhesive taps 814, 813 are applied, have mirror-finish films printed thereon, and the slanted right end face 212 of the transparent upper side plate 210 and the slanted upper end face 241 of the transparent right side plate 240 are processed into a mirror finish. Therefore, even when the rear side of the corner cover 520 is seen obliquely, the components that make up the frame assembly 10 and the structure thereof are not visible at all. This effect, together with the floating effect referred to above, gives a beautiful appearance to the frame assembly 10 and the liquid crystal display panel device incorporating the frame assembly 10 therein.

The same beautiful appearance is given to the upper left corner 11, the lower left corner 13, and the lower right corner 14, and also to the frame assembly 10 in its entirety.

The outer frame upper side plate 110, the transparent upper side plate 210, and the holders 610, 620, 630 shown in FIG. 2 are put together by several double-faced adhesive tapes including the double-faced adhesive tapes 812, 811, and the innermost holders 610, 620, 630 are fixed to the threaded holes 970 of the inner frame 900 shown in FIG. 7. Therefore, when strong external forces are exerted to the outer frame upper side plate 110, or due to aging, the components put together by the double-faced adhesive tapes may possibly be peeled off.

However, since the corner joints 410, 420 shown in FIGS. 8A and 8B firmly retain the outer frame upper side plate 110, the transparent upper side plate 210, and the holders 610, 620 integrally together, the components are not liable to be peeled off. Therefore, when the outer frame upper side plate 110 is attracted by a lifter and the frame assembly 10 or the liquid crystal display panel device incorporating the frame assembly 10 is moved, no problem arises in attracting the outer frame upper side plate 110 with the lifter or moving the frame assembly 10 or the liquid crystal display panel device incorporating the frame assembly 10.

In the above embodiment, the transparent upper side plate 210, the transparent lower side plate 220, the transparent left side plate 230, and the transparent right side plate 240 are employed to create a floating effect which makes the display screen of the liquid crystal display panel 20 look floating in the air. If such a floating effect is not required, then other boards may be employed in place of the transparent upper side plate 210, the transparent lower side plate 220, the transparent left side plate 230, and the transparent right side plate 240.

Alternatively, no boards may be interposed between the outer frame 100 and the inner frame 900, and the outer frame upper side plate 110, the outer frame lower side plate 120, the outer frame left side plate 130, and the outer frame right side plate 140 may be installed on the inner frame 900 by holders that are applied to those side plates.

In the above embodiment, the present invention is applied to a liquid crystal display panel device. However, the principles of the present invention are also applicable to any of various other flat display panel devices such as a plasma display panel device, or any of various other electronic devices other than flat display panel devices.

In embodiments, an outer frame has an outer frame upper side plate, an outer frame lower side plate, an outer frame left side plate, and an outer frame right side plate.' In an upper right corner, a transparent upper side plate, a transparent right side plate, and holders are applied to inner surfaces of the outer frame upper side and the outer frame right side plate, and are held together by a corner joint and a corner bracket that are inserted into a right end of the outer frame upper side plate and the outer frame right side plate. Upper left, lower left, and lower right corners are similarly assembled.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A frame assembly comprising:
an outer frame having upper, lower, left, and right side plates;
an inner frame disposed in said outer frame; and
a plurality of holders applied to inner surfaces of said upper, lower, left, and right side plates of said outer frame, for fixedly holding said upper, lower, left, and right side plates of said outer frame within said inner frame;
wherein said outer frame has a plurality of corners, and said upper and lower side plates of said outer frame and said left and right side plates of said outer frame are interfitted in said corners.

2. The frame assembly according to claim 1, wherein each of said upper, lower, left, and right side plates of said outer frame comprises an aluminum extrusion.

3. The frame assembly according to claim 2, wherein each of said holders comprises a plate having a member on an inner surface therefor for fixing the holder to said inner frame.

4. The frame assembly according to claim 3, wherein said upper, lower, left, and right side plates of said outer frame have respective boards applied to inner surfaces thereof.

5. The frame assembly according to claim 4, wherein said upper, lower, left, and right side plates of said outer frame have a plurality of engaging slits defined in inner surfaces thereof, and said corners of said outer frame have joints inserted in said engaging slits, respectively, for holding said upper, lower, left, and right side plates, said boards, and said holders integrally together.

6. The frame assembly according to claim 5, wherein said corners of said outer frame have brackets pressed respectively into said engaging slits in said upper, lower, left, and right side plates of said outer frame, for fixedly holding said joints in said corners.

7. The frame assembly according to claim 6, wherein said boards have slanted surfaces on opposite ends thereof, and said corners of said outer frame have covers covering regions in which said slanted surfaces of the boards of said upper and lower side plates and said slanted surfaces of the boards of said left and right side plates face each other in said corners.

8. The frame assembly according to claim 7, wherein each of said boards comprises a transparent plate having inner and outer surfaces with mirror-finish films printed thereon, said slanted surfaces of each of said boards being processed into a mirror finish.

9. An electronic device comprising:
a frame assembly including:
an outer frame having upper, lower, left, and right side plates;
an inner frame disposed in said outer frame; and
a plurality of holders applied to inner surfaces of said upper, lower, left, and right side plates of said outer frame, for fixedly holding said upper, lower, left, and right side plates of said outer frame within said inner frame;
wherein said outer frame has a plurality of corners, and said upper and lower side plates of said outer frame and said left and right side plates of said outer frame are interfitted in said corners; and
an electronic unit disposed in said inner frame of said frame assembly.

10. The electronic device according to claim 9, wherein said electronic unit comprises a flat display panel.

11. The electronic device according to claim 10, wherein said flat display panel comprises a liquid crystal display panel.
